# EUROPEAN PATENT SPECIFICATION

(11) **EP 3 162 205 B1**
(45) Date of publication and mention of the grant of the patent: **17.07.2019**
(21) Application number: 16196107.3
(22) Date of filing: 27.10.2016
(51) Int. Cl.: A01M 1/14

(54) **CARTRIDGE**
KARTUSCHE
CARTOUCHE

(30) Priority: 28.10.2015 GB 201519028
(43) Date of publication of application: 03.05.2017
(73) Proprietor: Pelsis Limited, Grimbald Crag Close Knaresborough North Yorkshire HG5 8PJ (GB)
(72) Inventor: Holmes, Tom, Knaresborough, North Yorkshire HG5 8PJ (GB)
(74) Representative: Appleyard Lees IP LLP

(56) References cited:
- US-A1- 2009 158 636
- US-A1- 2012 174 470

## Description

This invention relates to a cartridge for retaining immobilisation elements for a flying pest trap.

A flying pest trap typically comprises a housing containing an attracting element, such as an electrically powered light source that emits UV light (usually in addition to visible light), and an immobilisation element, such as a glueboard. The glueboard is a board carrying an adhesive that retains the pests when they make contact with the glueboard.

The flying pest trap functions by attracting flying pests, such as insects including various types of fly and moth, to the light source. When in the vicinity of the light source the pest will explore the area and come into contact with the glueboard and thereby become immobilised.

The efficacy of the glueboard diminishes over time, both because the glueboard becomes loaded with trapped pests, and because the adhesive on the glueboard become less effective due to exposure to the air and any heat generated by the attracting element.

Accordingly, regular replacement of the glueboard is required in order to maintain the efficacy of the trap. Typically, flying pest traps are therefore regularly serviced by dedicated service engineers, who periodically (e.g. monthly) arrive at a site and replace the glueboards of all flying pest traps on site.

Difficulties arise in that, whilst flying pest traps have broadly similar operating principles, the size, shape and constructional details of the traps - including the type of glueboards employed - varies. Each site may have a variety of traps, and a service engineer typically visits several sites in a given day. Therefore, the service engineer must carry a large variety of glueboards, and also must remember which traps are situated at which site, causing inconvenience during servicing. US20120174470A1 discloses a pest control device with a guide for installation and removal of glue boards.

It is an object of the present invention to address the above mentioned disadvantages, and any other disadvantages that may be apparent to the skilled person from the description which follows.

According to the present invention there is provided an apparatus and method as set forth in the appended claims. Other features of the invention will be apparent from the dependent claims, and the description which follows.

According to a first aspect of the present invention there is provided a cartridge adapted to retain a plurality of immobilisation elements.

Preferably, the cartridge is adapted to retain a first immobilisation element so as to expose an active surface thereof. Preferably, the cartridge is adapted to retain a second immobilisation element so as not to expose an active surface thereof. Preferably, the cartridge is adapted to retain the second immobilisation element behind the first immobilisation element, so that removal of the first immobilisation element exposes the second immobilisation element. Preferably, the cartridge is adapted to retain further immobilisation elements behind the second immobilisation element. The second immobilisation element may additionally incorporate a contact sheet to prolong a storage life of the element.

The cartridge comprises a rear wall and a plurality of side walls extending, preferably perpendicularly, from the periphery of the rear wall.

The cartridge comprises a retaining portion, adapted to retain the plurality of immobilisation elements within the cartridge. Preferably, the retaining portion extends in a plane substantially parallel to the plane of the rear wall, so as to retain the immobilisation elements between the rear wall and the retaining portion. Preferably, the retaining portion is adapted to contact a foremost immobilisation element. Preferably, the cartridge comprises a plurality of retaining portions disposed in the corners between adjacent side walls.

Preferably, the cartridge comprises an urging portion, adapted to urge the plurality of immobilisation elements towards the retaining portion. Preferably, the urging portion is disposed in the rear wall and is adapted to contact a rearmost immobilisation element. Preferably, the urging portion comprises at least one biasing element, biased towards the retaining portion. Preferably, the biasing element comprises a flexible member, biased towards the retaining portion. Preferably, the biasing element is disposed in a cut-out region of the rear wall. Preferably, the biasing element is an arched tab. Preferably, the cartridge comprises a plurality of biasing elements arranged in a plurality of rows.

Preferably, the cartridge is formed from a single piece of material, preferably plastics material, preferably by injection moulding.

Preferably, the cartridge comprises the plurality of immobilisation elements. Preferably, the immobilisation elements comprise an adhesive surface. Preferably, the immobilisation elements comprise a detachable protective layer disposed on the adhesive layer.

According to a second aspect of the present invention there is provided a flying pest trap comprising an attraction element and the cartridge of the first aspect.

The cartridge is detachable from the flying pest trap. According to a third aspect of the present invention there is provided a method of servicing a flying pest trap comprising installing a cartridge of the first aspect in the flying pest trap.

Preferably, the method further comprises the step of removing a protective layer of a first immobilisation element so as to expose an adhesive surface thereof.

Preferably, method further comprises the step of removing a first immobilisation element from the cartridge, wherein removing the first immobilisation element exposes a second immobilisation element.

Preferably, the method further comprises the step of removing a protective layer of the second immobilisation element so as to expose an adhesive surface thereof.

All of the features described herein can be combined with any of the above aspects in any combination.

For a better understanding of the invention and to show how the same may be brought into effect, embodiments of the same will now be described with reference to the accompanying drawings, in which:
Figure 1 is a schematic sectional view of a flying pest trap in accordance with an embodiment of the invention;
Figure 2 is a front perspective view of a cartridge for retaining immobilisation elements in accordance with an embodiment of the invention;
Figure 3 is a rear perspective view of the cartridge of Figure 2;
Figure 4 is a partially enlarged sectional view of the cartridge of Figure 2 filled with immobilisation elements;
Figure 5 is a front perspective view of the cartridge of Figure 2 filled with immobilisation elements; and
Figure 6 is a rear perspective view of the cartridge of Figure 2 filled with immobilisation elements.

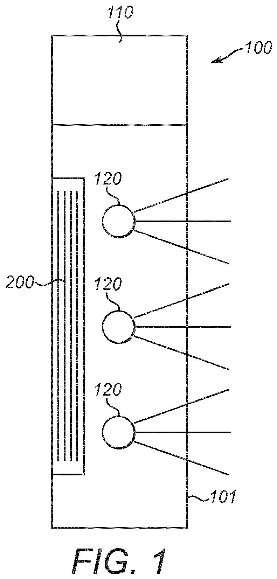

FIG. 1 shows a flying pest trap 100 in accordance with an embodiment of the invention. The trap 100 comprises a housing 101, which retains the other components of the trap.

The trap 100 comprises a plurality of attracting elements 120, such as UV light sources, which lure flying pests towards the trap. Apertures (not shown) formed in the front of the trap 100 permit the light generated by the attracting elements 120 to leave the trap, and also allow the ingress of the attracted flying pests into the trap. Control circuitry and a power supply are situated in an upper portion 110 of the trap.

A cartridge 200 adapted to retain a plurality of immobilisation elements 300, for example glueboards, is disposed behind the attracting elements 120, so as to not obstruct the light output by the attracting elements, whilst still being sufficiently proximate to the attracting elements 140 to capture the flying pests attracted thereto.

The cartridge 200 is detachably secured within the trap 100, so that it can be removed or replaced. In one example, the cartridge 200 is accessible by removing a portion of the housing 101.

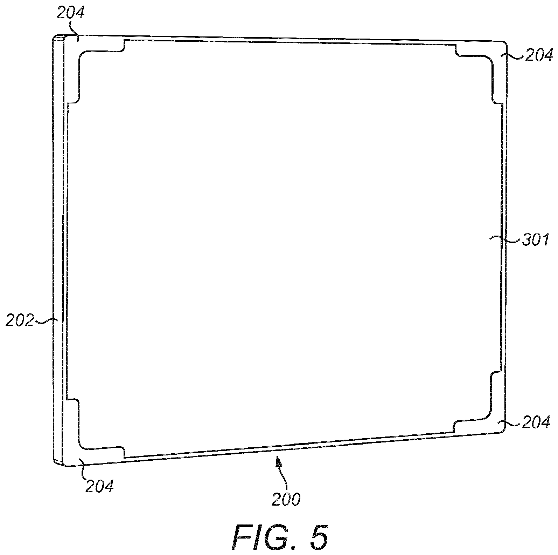

The immobilisation element 301 closest to the attracting elements 120 is exposed from the cartridge 200. Particularly, an adhesive surface of the element 301 (see FIG. 5) closest to the attracting elements 140 is exposed from the cartridge 200, thereby providing an adhesive surface for the capture of flying pests.

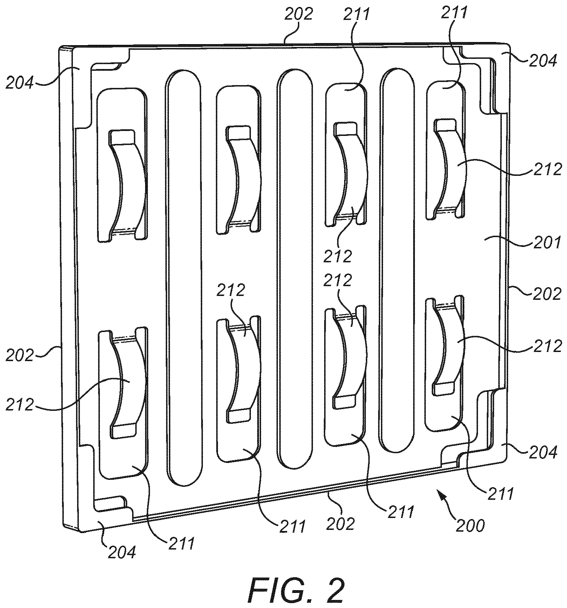

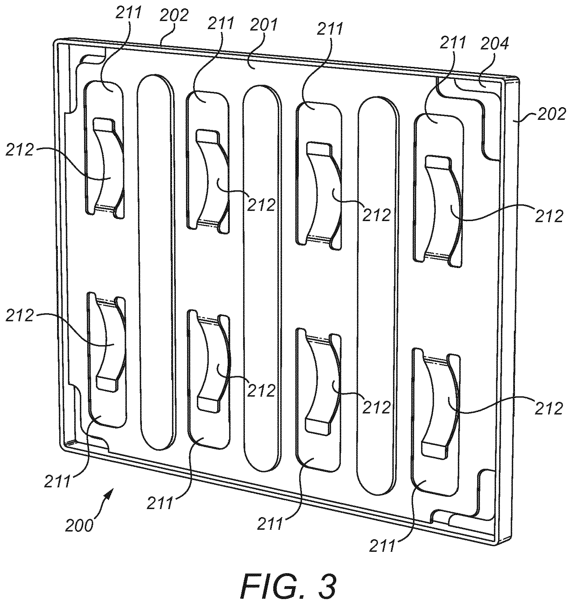

A cartridge 200 in accordance with an embodiment of the invention is shown in detail in FIGs. 2 and 3. The cartridge 200 takes the shape of a shallow tray formed from a rear wall 201 and side walls 202 extending perpendicularly from the rear wall 201 around the periphery of the rear wall 201.

The rear wall 201 is substantially rectangular so that the shallow tray is adapted to retain substantially rectangular immobilisation elements 300. However, it will be understood that the shape of the rear wall 201 may be changed to accommodate immobilisation elements 300 of different shapes.

The height of the side walls 202 is suitable for retaining around 6 to 12 immobilisation elements 300 therein. However, it will be understood that the height may be changed to accommodate more or fewer immobilisation elements.

The cartridge 200 further comprises retaining portions 204, which extend from the upper edge of the side walls 202 and in a plane parallel to the plane of the rear wall 201. Accordingly, the cartridge 200 is able to securely hold plural immobilisation elements by trapping them between the rear wall 201 and the retaining portions 204.

In one example, the retaining portions 204 are disposed in the four corners of the cartridge 200, so as to the contact the four corners of the foremost immobilisation element 301 (i.e. the immobilisation element closest to the retaining portion and furthest from the rear wall 201) in order to securely hold it in place, whilst still allowing easy access to it for removal when desired.

The cartridge 200 further comprises an urging portion, adapted to urge the immobilisation elements 300 retained within the cartridge away from the rear wall 201 and towards the retaining portions 204. In one example, the urging portion comprises one or more biasing element 210 disposed on the rear wall 201.

In more detail, the rear wall 201 comprises a plurality of cut-out regions 211. In one example, the rear wall 201 comprises eight substantially rectangular cut-out regions, arranged in two rows of four.

Each cut-out region 211 comprises a flexible member 212 extending from the rear wall 201 and into the cut-out region 211. The flexible member 212 is biased to a position in which a portion of the member 212 extends outwards from the rear wall 201 towards the plane of the retaining portions 204. The flexible member 212 is able to flex towards the rear wall 201 upon receipt of a suitable force. Accordingly, the flexible members 212 urge the immobilisation elements 300 retained therein towards the front of the cartridge 200, where the retaining portions 204 are located. In one example, each flexible member 212 is an arched tab.

In one example, the cartridge 200 is formed from a single piece of plastics material. In one example, the cartridge 200 is formed by injection moulding.

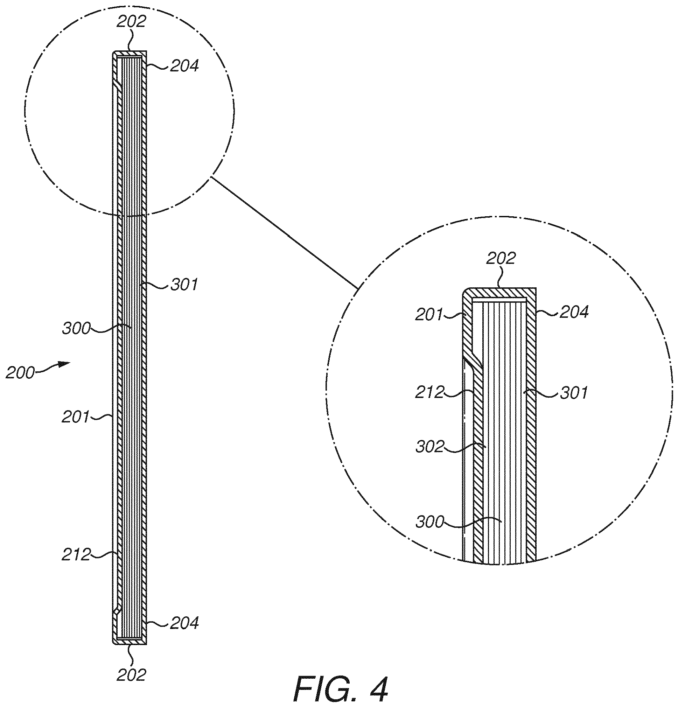

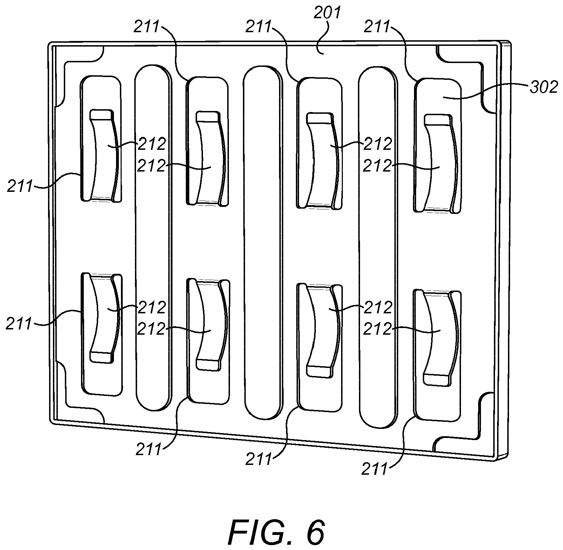

FIGs. 4-6 show the cartridge 200 filled with a plurality of immobilisation elements 300. As can be seen in FIG. 4, the immobilisation elements 200 are effectively stacked within the cartridge 200, with the foremost immobilisation element 301 exposed from the front of the cartridge 200 and the remaining immobilisation elements 300 disposed behind the uppermost immobilisation element 301.

In one example, each of the immobilisation elements 300 comprises a protective layer (not shown), such as a film or a paper, covering the adhesive surface. The paper must be removed to expose the adhesive surface and therefore activate the immobilisation element 300. Accordingly, the stacked immobilisation elements 300 do not adhere to each other within the cartridge 200.

The rearmost immobilisation element 302 is urged by the flexible members 212 towards the front of the cartridge 200, thereby retaining all of the immobilisation elements between the retaining portions 204 and the flexible members 212.

In use, the cartridge 200 is first filled with immobilisation elements 300. In some examples, the cartridge 200 is supplied to the service engineer already pre-filled
When the cartridge 200 is to be used, the protective layer covering the adhesive surface of the foremost immobilisation element 301 is removed, and the cartridge 200 is then installed within the flying pest trap 100.

When the foremost immobilisation element 301 is to be replaced, for example because it is saturated with flying pests or because the adhesive thereon is no longer suitably efficacious, the cartridge 200 is removed from the flying pest trap 100.

Subsequently, the foremost immobilisation element 301 is removed from the cartridge 300 and discarded. The immobilisation element 300 immediately behind the foremost immobilisation element 301 is exposed by the removal of the foremost immobilisation element 301, thereby effectively becoming the new foremost immobilisation element 301. The remaining immobilisation elements 300 are urged forward by the bias of flexible members, securely retaining the remaining elements 300 within the cartridge. The protective layer covering the adhesive surface of the new foremost immobilisation element 301 is removed, and the cartridge 200 is then re-installed in the flying pest trap 100.

The removal of the foremost element 301 and the removal of the protective layer covering the adhesive surface of the newly-exposed immobilisation element 301 is repeated each subsequent time replacement of the foremost immobilisation element 301 is desired.

Once the immobilisation elements 300 of the cartridge 200 are depleted, the cartridge 200 is refilled with a new stock of immobilisation elements 300. Alternatively, the cartridge 200 may be discarded and replaced with a new cartridge 200.

Various modifications will be apparent to those skilled in the art. For example, rather than flexible members 212, the whole or a portion of the rear wall 201 may be instead configured to move towards the front of the cartridge, for example by spring bias. It will be understood that the cartridge 200 adapted to fit varying flying pest traps of varying constructions, and is not limited to use in pest trap 100. Furthermore, it will be understood that the cartridge 200 may be adapted so that it can be easily retrofitted to existing pest traps.

It will be appreciated that the cartridge 200 provides a convenient means of replacing the immobilisation element 300 of a pest trap 100, by simply removing and discarding the foremost immobilisation element of the cartridge 200. Accordingly, the servicing of the pest trap 100 is carried out more efficiently, and there is less need for the engineer to carry around a large stock of replacement immobilisation elements.

## Claims

1. A cartridge (200) adapted to retain a plurality of immobilisation elements (300), the cartridge being adapted to be detachably secured in a housing (101) of a flying pest trap,
wherein the cartridge (200) comprises:
a rear wall (201);
a plurality of side walls (202) extending from the periphery of the rear wall (201), and
a retaining portion (204) adapted to retain the plurality of immobilisation elements (300) within the cartridge (200).

2. The cartridge of claim 1, wherein the retaining portion (204) is adapted to retain a first immobilisation element (301) so as to expose an active surface thereof and a second immobilisation element (300) so as not to expose an active surface thereof.

3. The cartridge of claim 2, wherein the retaining portion (204) is adapted to retain the second immobilisation element (300) behind the first immobilisation element (301), so that removal of the first immobilisation element (301) exposes the second immobilisation element (300).

4. The cartridge of claim 3, wherein the retaining portion (204) is adapted to retain further immobilisation elements (300) behind the second immobilisation element (300).

5. The cartridge of any preceding claim,,
wherein the retaining portion (204) extends in a plane substantially parallel to the plane of the rear wall (201), so as to retain the immobilisation elements between the rear wall (201) and the retaining portion (204).

6. The cartridge of claim 5, comprising a plurality of retaining portions (204) disposed in the corners between adjacent side walls (202).

7. The cartridge of claim 5 or 6, comprising an urging portion adapted to urge the plurality of immobilisation elements (300) towards the retaining portion (204), wherein the urging portion is disposed in the rear wall (201) and is adapted to contact a rearmost immobilisation element (302).

8. The cartridge of claim 7, wherein the urging portion comprises at least one flexible member (212), biased towards the retaining portion (204).

9. The cartridge of any preceding claim, wherein the cartridge (200) is formed from plastics material by injection moulding.

10. The cartridge of any preceding claim, wherein the immobilisation elements (300) comprise an active surface having an adhesive layer.

11. The cartridge of claim 10, wherein the immobilisation elements (300) comprise a detachable protective layer disposed on the adhesive layer.

12. A flying pest trap (100) comprising a housing (101), an attraction element (120) and the cartridge (200) of any preceding claim, wherein the cartridge is detachable from the housing (101) of the flying pest trap (100).

13. A method of servicing a flying pest trap (100) comprising:
installing a cartridge (200) retaining a plurality of immobilisation elements (300) in a housing (101) of the flying pest trap (100), wherein the cartridge (200) comprises:
a rear wall (201);
a plurality of side walls (202) extending from the periphery of the rear wall (201), and
a retaining portion (204) adapted to retain the plurality of immobilisation elements (300) within the cartridge (200).

14. The method of claim 13, further comprising the step of removing a first immobilisation element (301) from the cartridge (200), wherein removing the first immobilisation element (301) exposes a second immobilisation element (300).

## Patentansprüche

1. Kartusche (200), die dazu angepasst ist, mehrere Fixierungselemente (300) zu halten, wobei die Kartusche dazu angepasst ist, lösbar in einem Gehäuse (101) einer Fluginsektenfalle befestigt zu sein,
wobei die Kartusche (200) Folgendes umfasst:
eine Rückwand (201);
mehrere Seitenwände (202), die sich vom Rand der Rückwand (201) erstrecken, und
einen Halteabschnitt (204) der dazu angepasst ist, die mehreren Fixierungselemente (300) in der Kartusche (200) zu halten.

2. Kartusche nach Anspruch 1, wobei der Halteabschnitt (204) dazu angepasst ist, ein erstes Fixierungselement (301), um eine Wirkfläche dessen freizulegen, und ein zweites Fixierungselement (300), um keine Wirkfläche dessen freizulegen, zu halten.

3. Kartusche nach Anspruch 2, wobei der Halteabschnitt (204) dazu angepasst ist, das zweite Fixierungselement (300) hinter dem ersten Fixierungselement (301) zu halten, sodass das Entfernen des ersten Fixierungselements (301) das zweite Fixierungselement (300) freilegt.

4. Kartusche nach Anspruch 3, wobei der Halteabschnitt (204) dazu angepasst ist, weitere Fixierungselemente (300) hinter dem zweiten Fixierungselement (300) zu halten.

5. Kartusche nach einem der vorstehenden Ansprüche, wobei sich der Halteabschnitt (204) in einer Ebene im Wesentlichen parallel zur Rückwand (201) erstreckt, um die Fixierungselemente zwischen der Rückwand (201) und dem Halteabschnitt (204) zu halten.

6. Kartusche nach Anspruch 5, mehrere Halteabschnitte (204) umfassend, die in den Ecken zwischen angrenzenden Seitenwänden (202) angeordnet sind.

7. Kartusche nach Anspruch 5 oder 6, einen Drückabschnitt umfassend, um die mehreren Fixierungselemente (300) in Richtung des Halteabschnitts (204) zu drücken, wobei der Drückabschnitt in der Rückwand (201) angeordnet ist und dazu angepasst ist, ein hinterstes Fixierungselement (302) zu berühren.

8. Kartusche nach Anspruch 7, wobei der Drückabschnitt mindestens ein flexibles Element (212) umfasst, das in Richtung des Halteabschnitts (204) vorgespannt ist.

9. Kartusche nach einem der vorstehenden Ansprüche, wobei die Kartusche (200) durch Spritzgießen aus einem Kunststoffmaterial ausgebildet ist.

10. Kartusche nach einem der vorstehenden Ansprüche, wobei die Fixierungselemente (300) eine Wirkfläche umfassen, die eine Klebeschicht aufweist.

11. Kartusche nach Anspruch 10, wobei die Fixierungselemente (300) eine lösbare Schutzschicht umfassen, die auf der Klebeschicht angeordnet ist.

12. Fluginsektenfalle (100), die ein Gehäuse (101), ein Lockelement (120) und die Kartusche (200) nach einem der vorstehenden Ansprüche umfasst, wobei die Kartusche vom Gehäuse (101) der Fluginsektenfalle (100) lösbar ist.

13. Verfahren zum Instandhalten einer Fluginsektenfalle (100), Folgendes umfassend:
Einsetzen einer Kartusche (200), die mehrere Fixierungselemente (300) hält, in einem Gehäuse (101) der Fluginsektenfalle (100), wobei die Kartusche (200) Folgendes umfasst:
eine Rückwand (201);
mehrere Seitenwände (202), die sich vom Rand der Rückwand (201) erstrecken, und
einen Halteabschnitt (204) der dazu angepasst ist, die mehreren Fixierungselemente (300) in der Kartusche (200) zu halten.

14. Verfahren nach Anspruch 13, ferner den Schritt des Entfernens eines ersten Fixierungselements (301) aus der Kartusche (200) umfassend, wobei das Entfernen des ersten Fixierungselements (301) ein zweites Fixierungselement (300) freilegt.

## Revendications

1. Cartouche (200) conçue pour retenir une pluralité d'éléments d'immobilisation (300), la cartouche étant conçue pour être fixée de façon détachable dans un logement (101) d'un piège à insectes nuisibles volants,
la cartouche (200) comprenant :
une paroi arrière (201) ;
une pluralité de parois latérales (202) s'étendant depuis la périphérie de la paroi arrière (201), et
une partie de retenue (204) conçue pour retenir la pluralité d'éléments d'immobilisation (300) à l'intérieur de la cartouche (200).

2. Cartouche selon la revendication 1, dans laquelle la partie de retenue (204) est conçue pour retenir un premier élément d'immobilisation (301) de façon à exposer l'une de ses surfaces actives et un deuxième élément d'immobilisation (300) de façon à ne pas exposer l'une de ses surfaces actives.

3. Cartouche selon la revendication 2, dans laquelle la partie de retenue (204) est conçue pour retenir le deuxième élément d'immobilisation (300) derrière le premier élément d'immobilisation (301), de sorte que le retrait du premier élément d'immobilisation (301) expose le deuxième élément d'immobilisation (300).

4. Cartouche selon la revendication 3, dans laquelle la partie de retenue (204) est conçue pour retenir d'autres éléments d'immobilisation (300) derrière le deuxième élément d'immobilisation (300).

5. Cartouche selon l'une quelconque des revendications précédentes, dans laquelle la partie de retenue (204) s'étend dans un plan sensiblement parallèle au plan de la paroi arrière (201), de façon à retenir les éléments d'immobilisation entre la paroi arrière (201) et la partie de retenue (204).

6. Cartouche selon la revendication 5, comprenant une pluralité de parties de retenue (204) disposées dans les angles entre des parois latérales (202) adjacentes.

7. Cartouche selon la revendication 5 ou 6, comprenant une partie de poussée conçue pour pousser la pluralité d'éléments d'immobilisation (300) en direction de la partie de retenue (204), dans laquelle la partie de poussée est disposée dans la paroi arrière (201) et est conçue pour entrer en contact avec l'élément d'immobilisation le plus à l'arrière (302).

8. Cartouche selon la revendication 7, dans laquelle la partie de poussée comprend au moins un élément flexible (212) polarisé en direction de la partie de retenue (204).

9. Cartouche selon l'une quelconque des revendications précédentes, la cartouche (200) étant formée de matière plastique moulée par injection.

10. Cartouche selon l'une quelconque des revendications précédentes, dans laquelle les éléments d'immobilisation (300) comprennent une surface active comportant une couche adhésive.

11. Cartouche selon la revendication 10, dans laquelle les éléments d'immobilisation (300) comprennent une couche de protection détachable disposée sur la couche adhésive.

12. Piège à insectes nuisibles volants (100) comprenant un logement (101), un élément d'attraction (120) et la cartouche (200) selon l'une quelconque des revendications précédentes, dans lequel la cartouche est détachable du logement (101) du piège à insectes nuisibles volants (100).

13. Procédé d'utilisation d'un piège à insectes nuisibles volants (100) comprenant :
l'installation d'une cartouche (200) retenant une pluralité d'éléments d'immobilisation (300) dans un logement (101) du piège à insectes nuisibles volants (100), dans lequel la cartouche (200) comprend :
une paroi arrière (201) ;
une pluralité de parois latérales (202) s'étendant depuis la périphérie de la paroi arrière (201), et
une partie de retenue (204) conçue pour retenir la pluralité d'éléments d'immobilisation (300) à l'intérieur de la cartouche (200).

14. Procédé selon la revendication 13, comprenant en outre l'étape de retrait d'un premier élément d'immobilisation (301) de la cartouche (200), dans lequel le retrait du premier élément d'immobilisation (301) expose un deuxième élément d'immobilisation (300).
